# EUROPEAN PATENT APPLICATION

(11) **EP 4 574 610 A1**
(43) Date of publication of application: **25.06.2025**
(21) Application number: 23855104.8
(22) Date of filing: 10.08.2023
(51) Int. Cl.: B60W 40/02, B60S 1/56

(54) **CAMERA DEVICE FOR VEHICLE SAFETY**

(30) Priority: 16.08.2022 KR 20220101931
(71) Applicant: Shon, Young Chan, Goyang-si, Gyeonggi-do 10420 (KR)
(72) Inventor: Shon, Young Chan, Goyang-si, Gyeonggi-do 10420 (KR)
(74) Representative: ZBM Patents - Zea, Barlocci & Markvardsen
(86) International application number: PCT/KR2023/011876
(87) International publication number: WO 2024/039137

(57) **Abstract**

The present disclosure relates to a camera device for vehicle safety. The camera device directly or indirectly connected to hardware and software systems installed in a vehicle and is equipped in the vehicle. As a result, the camera device facilitates autonomous driving systems including Advanced Driver Assistance Systems (ADAS), by utilizing its algorithms in conjunction with an Electric Power Control Unit (EPCU) and an Electronic Control Unit (ECU), including a Vehicle Control Unit (VCU). Further, the camera device facilitates real-time wired and wireless video transmission and storage through antenna modules of a display device and a camera device inside the vehicle, and can record emergency situations caused by traffic accidents during vehicle operation, as well as the on-site situation for before and after the accident, for use as video evidence. Additionally, the camera device operates when sensors installed in the vehicle detect physical and chemical changes during parking or stopping, allowing video footage of the vehicle damage site to be recorded.

## Description

### Technical Field

The present disclosure relates to a camera device for vehicle safety. The camera device is directly or indirectly connected to the hardware and software systems installed in the vehicle, and is provided within the vehicle. As a result, the camera device facilitates autonomous driving systems including Advanced Driver Assistance Systems, by utilizing its algorithms in conjunction with the Electric Power Control Unit and the Electronic Control Unit, including the Vehicle Control Unit. Further, the camera device facilitates real-time wired and wireless video transmission and storage through the antenna modules of the display device and camera device inside the vehicle, and can record emergency situations caused by traffic accidents during vehicle operation, as well as the on-site situation for before and after the accident, for use as video evidence. Additionally, the camera device operates when sensors installed in the vehicle detect physical and chemical changes during parking or stopping, allowing video footage of the vehicle damage site to be recorded.

### Related Art

Current vehicle cameras are installed on the bumper, exterior or interior of the vehicle. However, cameras that installed on the bumper and exterior of the vehicle may have dirt, dust, ice, raindrops, or other foreign substances on the camera lens. If they are not removed before driving or do not naturally clear away, it becomes difficult to capture camera footage, which can lead to video errors. These errors can cause serious malfunction in the autonomous driving system, increasing the likelihood of accidents. Additionally, there are blind spots in the camera lens's field of view. Additionally, the case of the camera (Black Box) installed inside the vehicle, there may be situations where necessary footage cannot be obtained due to issues such as malfunction caused by the driver's lack of maintenance, memory capacity overflow, disconnection, or absence of update. Further, the video is often dark and blurry due to the dark tinted film coated on the glass. The primary purpose of current vehicle cameras is to capture footage in the event of traffic accidents and vehicle damages.

### SUMMARY

### Technical Problem

Therefore, the present disclosure is contrived to solve the aforementioned issues. A camera device for vehicle safety according to the present disclosure was invented for Advanced Driver Assistance Systems (ADAS) and autonomous driving systems by ensuring clear image quality without interruptions caused by unexpected weather changes and external stimuli during vehicle operation, while controlling the vehicle using the camera device's algorithms. The driver ensures visibility by operating the wipers and washer fluid when snow or rain falls during vehicle operation, or when foreign substances, insects, or the like stick to the windshield at high speeds.

However, when snowflakes, raindrops, insects, dust or the like stick to the camera lens on the exterior of the vehicle during vehicle operation, leading to video errors. These errors cause serious malfunctions in vehicle control during autonomous driving, potentially resulting in accidents. Additionally, objects in blind spots outside the camera lens's field of view may not be recognized, leading to accidents.

Therefore, by equipping the vehicle with the camera device for vehicle safety according to the present disclosure, issues such as unexpected weather changes, foreign substances, and blind spots can be resolved, ensuring vehicle safety in the same way the driver controls the vehicle through their visual perception.

The other objects, specific advantages, and novel features of the present disclosure will become more apparent in light of the following detailed description in conjunction with the accompanying drawings.

### Technical Solution

According to a camera device for vehicle safety of the present disclosure, the camera device is equipped with a camera module and a circuit board, directly or indirectly connected to hardware and software systems of a vehicle, and includes a case for power and data input • output and a main body fixing and driving the case to the vehicle.

The circuit board includes a microprocessor for digital signal processing (DSP) and control (MCU) purposes, an application processor (CPU) for driving an application program, a memory chip for storing data, an antenna module for wireless communication, a SIM (Subscriber Identity Module) in the form of a card or chip containing vehicle-mobile communication user data and security code for communication security and authentication during wireless communication along with a slot for input • output of the SIM and a status LED indicating the on • off status, a microphone for detecting and recording sounds around the vehicle, a speaker for voice output, an amplifier connected to the microphone and the speaker and amplifying input • output signals, an input • output terminal for power and data input • output, an status LED indicating power supply and the operation of the camera module, a transparent brush for removing raindrops, snow, foreign substances and the like that may adhered to a camera lens during vehicle operation and cause video errors, a brush pad functioning as a wiper for the brush and a brush motor for rotating the brush, a temperature sensor and a humidity sensor for measuring the internal temperature and humidity, a heating wire for removing snow, ice and moisture adhered to the surface of the case and the brush, and a voltage regulator for maintaining a constant voltage for the heating wire and the circuit board.

The antenna module is equipped with an antenna for transmitting and receiving wireless signal and an amplifier for amplifying the signals transmitted along with received by the antenna, a wireless chip with functions for noise removal, filtering, modulation and demodulation of the signal, a Satellite Navigation System (GPS) for measuring vehicle location, and a status LED indicating wireless connection status, and transmits and stores the video data from the camera module and the vehicle location to a server connected to via wireless network. Thereby, the antenna module facilitates the autonomous driving system including the advanced driver assistance system by linking a location-based navigation system and an Image Recognition Vehicle Control System. Furthermore, the user can connect to the network via their smartphone (Mobile Device) App or PC website, log in and save settings, enabling the user to check real-time or stored videos, wirelessly control the camera device and wirelessly update the application program.

The brush motor for rotating the brush is typically off, but activates when a rain sensor installed in the vehicle detects raindrops, when the vehicle is driving at high speeds exceeding a preset value, when the windshield wiper is operating, or when measurement values related to the temperature and humidity sensors are detected, thereby avoiding video errors on the camera lens, due to raindrops, snowflakes, moisture, insects, foreign substances or the like.

Additionally, the user is able to check sounds around the vehicle using the microphone via the Mobile App and PC Web Driver and output their voice in real-time through the speaker.

The wireless chip includes one or more wireless Chipsets for processing signal across multiple wireless channels.

Furthermore, the circuit board includes a System-on-Chip (SoC) that embeds the system within one semiconductor chip as well as an Artificial Intelligence System (Al System).

The heating wire is connected to the temperature sensor and humidity sensor of the circuit board. It is typically off but activates (on) when measurement values related to temperature and humidity is detected, and then controlled (off) after reaching normal levels or after a set time, allowing removing droplets, snow, ice and moisture adhered to the surface of the case and the brush.

The camera module is equipped with a camera lens, an image sensor which converts light entering through the camera lens into a digital signal, a circuit wiring for data transmission by connecting the image sensor, and an infrared LED for capturing images in nighttime, or low-light or dark areas. It is connected to the circuit board to wirelessly transmits data to a network server through the antenna module, and to the hardware and software systems inside the vehicle through an input • output terminals, thereby being connected to a Vehicle Control Unit (VCU), which includes steering, lighting, acceleration, braking, and transmission systems, for real-time storage of video data during vehicle operation and vehicle control, and facilitating the autonomous driving system and the advanced driver assistance system through algorithms based on the video data.

Furthermore, the camera module is capable of recognizing LED road sings, traffic signals, rake lights, turn signals, reverse lights, tail lights, hazard lights of vehicles ahead, headlights and fog lights of oncoming vehicles in the opposite lane, emergency warning lights of ambulances, fire trucks, and police vehicles, as well as the lights from surrounding vehicles, objects, and buildings during nighttime or in regions experiencing heavy rain, snowfall, or fog. Additionally, it recognizes the movement direction, speed, distance, and stopping of pedestrians, vehicles, and objects in a 360-degree field without blind spots, thereby facilitating autonomous driving system. In the case of manual driving, this recognizes suddenly appearing vehicles, pedestrians, children, or animals in all directions, and alerts the driver with sound and alarm warnings and performs emergency controls such as lane-keeping and sudden lane changes, collision avoidance, emergency lighting control, rapid deceleration or acceleration, sudden braking, and speed maintenance, thereby facilitating the advanced driver assistance system.

The image sensor is connected to the circuit board via the circuit wiring and is linked to the application processor for processing the application program of the video data.

The infrared LED includes a light sensor for automatic control depending on conditions such as day or night, or areas with darkness, fog, heavy rain, heavy snow, or tunnels.

The input • output terminal includes a connector for wireless connection of power and data input • output, an input • output port, and a device slot.

Furthermore, the main body is equipped with a driving motor for automatically operating the case through wireless control based on the ignition status of the vehicle, the operation of sensors due to physical • chemical changes, the control via a dedicated button and a dedicated icon on the in-vehicle display for controlling the operation of the camera device, voice recognition control, or wireless control via user's mobile app and web driver, and a switch for controlling the driving motor.

### Advantageous Effects

According to the present disclosure, the camera device for vehicle safety is installed in the vehicle, addressing issues caused by unexpected weather changes, foreign substances and blind spot, thereby ensuring vehicle safety during autonomous driving or manual driving utilizing algorithms based on images from the camera module, similar to controlling the vehicle through the driver's visual perception. As a result, this facilitates advanced driver assistance systems and autonomous driving systems.

Furthermore, the camera device is equipped with the antenna module, transmitting and storing data of the camera module to a server connected via a wireless network, allowing the user to check stored footage through their mobile app and PC web driver, and enabling wireless real-time updates of the embedded application program and real-time wireless control of the device.

Additionally, a network server of the camera device calculates and stores vehicle control values based on traffic signals and driving behavior patterns, such as pedestrian response patterns, braking patterns, acceleration and deceleration patterns, lane-keeping and lane-changing patterns, parking patterns, left and right turn patterns, average driving distance and speed, frequently visited destinations like home or work, and obstacle avoidance patterns, using an artificial intelligence system. These values are then applied during autonomous driving, thereby facilitating autonomous driving based on the driver's usual driving patterns.

### BRIEF DESCRIPTION OF THE DRAWINGS

FIG. 1 is a structural view of a camera device for vehicle safety according to the present disclosure.
FIG. 2 is a detailed view of the camera device for vehicle safety according to the present disclosure.
FIG. 3 is a structural modification view of the camera device for vehicle safety according to the present disclosure.
FIG. 4 is a schematic view of the camera device according to the present disclosure.
FIG. 5 is a view showing the shooting and detection range of the camera device for vehicle safety according to the present disclosure.
FIG. 6 is an image configuration view of the camera device for vehicle according to the present disclosure.

### DETAILED DESCRIPTION

### Best Mode

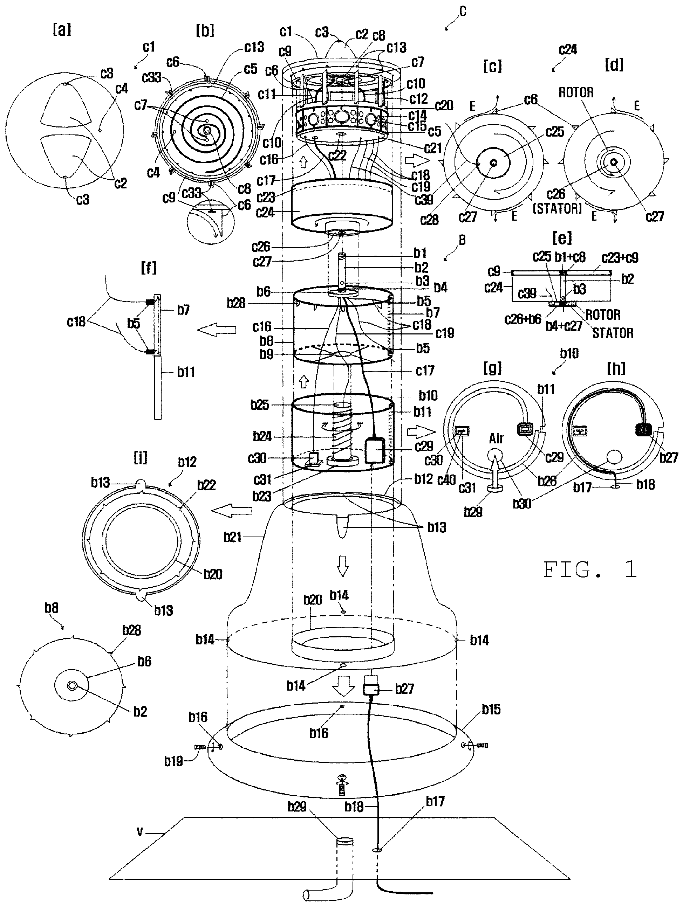

FIG. 1 is a structural view of a camera device according to the present disclosure. The camera device of the present disclosure is divided into a case C and a main body B for driving the case C vertically.

Firstly, a circular cap c1 is provided on the upper part of the case C, a circular or polygonal main board box c20 embedding a camera module and a circuit board c21 is attached to the bottom of the cap c1. A camera lens c15 and an infrared LED c14 are exposed to the outside, through a groove of the main board box c20.

A transparent brush c 24 wraps around the mainboard box c20 from the bottom to the top, and an attaching part c23 of the brush c24 is inserted into a rotating holder c9 at the edge of the bottom surface of the cap c1, thereby preventing the brush c24 from wobbling or detaching while rotating.

The main body B is divided into an internal component b8 that is driven vertically, an external component b10 wrapping the internal component b8, and an external case b21 for protecting the case C, internal component b8 and external component b10.

In the case C, a spiral bottom part b4 of a fixing screw b2 located at the center of the upper surface of the internal component b8 is inserted into a screw hole c27 located at the center of the brush c24, and then rotated to lock, allowing attaching and fixing the bottom surface c26 of the brush c24 and the upper surface b6 of the internal component b8. A spiral upper part b1 is inserted into a spiral fixing groove c8 located at the center of the bottom surface of the cap c1, passing through a screw hole c22 in the center of a circuit board 21c, and then rotated to lock, allowing fixing the brush c24, the main board box c20 and the cap c1 to the fixing screw b2.

A driving holder b9 for driving vertical motion is provided in the center of the bottom surface of the internal component b8, and coupled with a spiral rotating shaft b24 of a driving motor b23. A female holder b7 is provided at the edge, coupling with a male holder b11 of the external component b10 to prevent the rotation of the internal component b8 when the driving holder b9 is driven vertically.

Furthermore, the upper part of the external component b21 is equipped with an attaching part b12 which is attached to a circular edge of the cap c1 and the internal component b8. This is provided with a drainage groove b13 for preventing raindrops from entering the attaching part b12 and directing them outside.

Multiple tiny air holes c13 on the edge of the bottom of the cap c1 prevent the attaching part b12 and the bottom of the cap c1 from sticking together due to air adhesion when the case C is driven vertically, and function as a path for outputting the internal speaker sound to the outside, alternatively transmitting the external sound to a microphone, as well as for discharging the internal air to the outside.

Furthermore, a fixing groove b20 for fixing the external component b10 is provided at the center of the bottom of the external case b21, along with a circular or polygonal fixing band b15 for fixing the external case b21 to the vehicle exterior v is provided along with a crew hole b16 for attaching to a screw hole b14 and fixing with a fixing screw b19.

The inside of the fixing groove b20 is an empty space, where adhesive is applied to the inner surface that contacts the external component b10, and then the bottom surface of the external component b10 is inserted and fixed.

The fixing ban b15 is attached with adhesive to the part where a wiring hole b17 is provided for connecting an air conditioning pipe b29 of the vehicle exterior v to a male connector b27 via wiring b18, installing the external case b21 to the vehicle.

The air conditioning pipe b29 is connected to an air conditioning device inside the vehicle and is designed to adjust the internal temperature of the case C and the external case b21 to match the temperature inside the vehicle, when a driver operates an air conditioner or a heater in response to changes in interior temperature, or when an automatic indoor temperature control system is activated.

The male connector b27 is directly • indirectly connected to hardware and software systems inside the vehicle via wiring b18 and it is designed to facilitate of the input • output of power and data.

A heating wire c5 is connected to the circuit board c21 and attached to the inside • outside of the main board box c20 as well as the inner surface of the cap c1. It is linked to a temperature sensor and a humidity sensor, and is controlled, thereby removing ice, snow water droplets and moisture which are adhered to the case.

The wiring connected to input • output terminal of the circuit board c21 is directly • indirectly connected to the hardware and software systems inside the vehicle. Connected to the circuit board c21 and controlled are a female connector wire c17 for data communication and power supply, a driving motor b23 wire c19 for driving the internal component b8 vertically, a switch b5 wire c18 for controlling the driving motor b23, a slot c30 wire c16 for input • output of a SIM containing user information, security codes, and more for vehicle communication security and authentication, a brush motor c25 wire c39 for rotating the brush c24, an antenna c2 wire c10 connected to one or more antennas c2 for wireless communication on the top of the cap c1, and a status LED c3 indicating power supply and wireless connection status at the end of the antenna c2, a light sensor wire c11 for controlling the infrared LED c14, and a heating wire c5 wire c12 connected to wiring c5 that is grounded to the inner surface of the cap c1 and the inside • outside of the main board box c20.

The female connector c29 wire c17, the driving motor b23 wire c19, the switch b5 wire c18 and the slot c30 wire c16 pass through the empty space inside a wiring hole b3 of the fixing screw b2, and then are connect to the interior of the internal component b8 and the outer component b10. The driving motor b23 wire c19 is connected to the droving motor b23 through the empty space b25 inside the rotating shaft b24.

Additionally, in more detail, [a] is a plan view of the top of the cap c1 where provided are one or more of the antennas c2 with spiral-wound conductor inside, the status LED c3 at the end of the antenna c2 and a light sensor c4 inside a hole made of a transparent material to detect external brightness.

[b] is a rear view of the inside of the cap c1 where provided are the fixing groove c8 at the center, the heating wire c5 for removing ice and moisture accumulated on the cap c1 due to limited temperature and humidity as well as ice and moisture that may form on the rotating holder c9, an antenna c2 terminal c7 connected to the conductor inside the antenna c2, the light sensor c4 inside, the rotating holder c9 attached to the brush c24, a brush pad c6 made of the same material and for the same purpose as a vehicle wiper, in close contact with the outer surface of the brush c24, a T-shaped stator c33 for fixing the brush pad c6 to the outer edge of the rotating holder c9 by inserting it from the bottom to the top, and the air hole c13 for air circulation, which is a fine hole, connects the outer surface and inner surface of the rotating holder c9.

Additionally, [c] is a plan view of the inside of the brush c24, where the wiring c39 is connected to a terminal c28 of the brush motor c25, and the spiral screw hole c27 is provided at the center to attach the fixing screw b2, thereby fixing the brush motor c25.

[d] is a rear view of the brush c24, where the bottom surface c26 (STATOR) that contacts the top surface of the internal component b8 does not make contact with the rotating part (ROTOR) of the brush c24, thereby fixing the brush motor c25.

Furthermore, as shown in [c] and [d], when the brush motor c25 rotates, the friction and centrifugal force between the external surface of the brush c24 and the brush pad c6 remove foreign substances such as snow and raindrops, thereby preventing video errors on the camera lens c15.

[e] is a detailed view of the brush c24, which the brush c24 includes the main board box c20 for attaching the rotating holder c9 and the attaching part c23. The top b1 and the bottom b4 of the fixing screw b2 are attached to the fixing groove b8 and the screw hole c27, respectively. Additionally, the bottom surface c26 of the brush c24 and the top surface b6 of the internal component b8 are attached to fix the brush c24.

Then, the stator and rotor of the brush motor c25 are provide, thereby rotating the brush c24 with the screw hole c27 serving as a fixing axis.

[f] illustrates that the switch b5 is provided in the female holder b7 of the internal components b8 to control the driving motor b23. A cushioning spring is provided inside the switch b5, controls the rotation, reverse rotation, and stopping of the driving motor b23 depending on its connection status (on/off) with the male holder b11 of the external component b10, thereby driving the case C vertically.

Furthermore, [g] and [h] are views showing the bottom surface of the external component b10. Firstly, [g] is provided with a female connector c29 for data communication and power supply, a status LED indicating connection status (on/off ) of a slot c30 for input • output of the SIM for communication security and authentication, and a slot groove C31. A cable holder b26 for fixing an air conditioning pipe groove b30, which connects an air-conditioning pipe b29 inside the vehicle, as well as the wiring b18 of the male holder b11 and the male connector b27.

Then, [h] illustrates that the female connector c29 attaches to the male connector b27. The wiring b18, which is connected to the inside of the vehicle through the wiring hole b17, is fixed to the cable holder b26.

Additionally, [i] is a plan view illustrating the attaching part b12 and the top of the internal component b8. Provided is a saw-toothed brush pad c6 hole b22 on the attaching part b12, which engages with the brush pas c6 when the case c is driven vertically. Provided are the drainage groove b13 and the fixing groove b20 for fixing the external component b10 at the center of the bottom surface.

Furthermore, a saw-toothed protruding groove b28, which engages the brush pad c6 hole b22, is provided at the edge of the internal component b8. Provided at the center are the fixing screw b2 and the top surface b6 that contacts the brush c24 bottom surface c26.

### Description of Embodiments

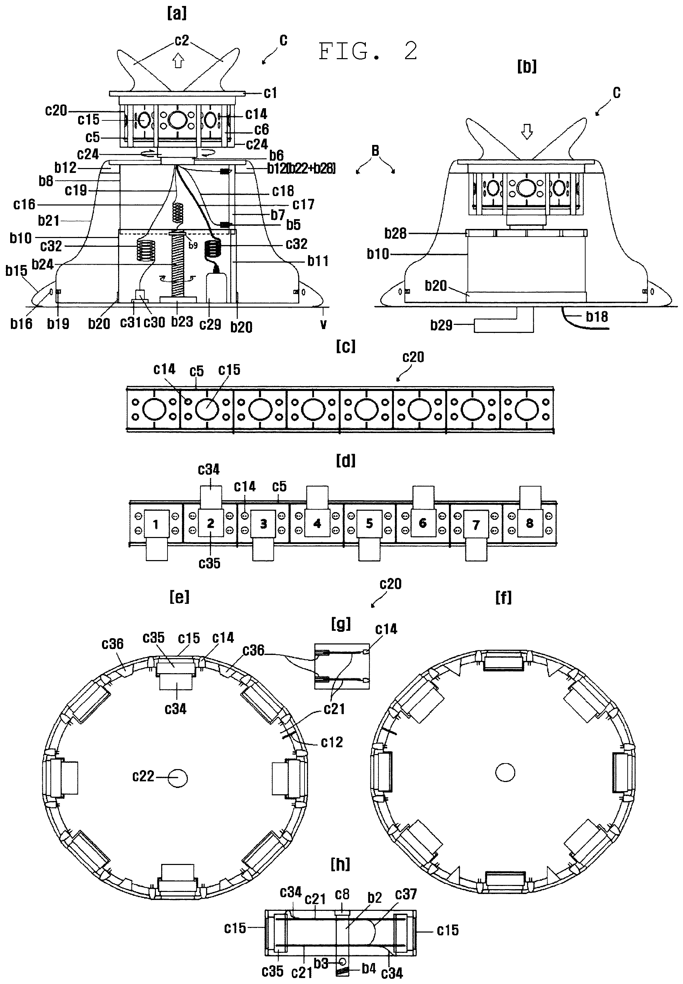

FIG. 2 is a detailed view of the camera device for vehicle safety according to the present disclosure. Firstly, [a] illustrates that the case C is fully exposed to the outside from the main body B, where the case C is provided with one or more of the antennas c2, the camera lens c15 and the infrared LED c14 are exposed to the outside through the groove of the main board box c20, and are in contact with the heating wire c5, and provided are the brush c24 surrounding the main board box c20, and the brush pad c6 which is inserted into the T-shaped stator c33 of the cap c1 and comes into close contact with the outer surface of the brush c24.

As shown in FIG, 1, in the main body C, the top surface b6 of the internal component b8 is attached to the bottom surface c26 of the brush c24, fixing the case C, and the case C operates outward, attaching the saw-toothed protruding groove b28 to the brush pad c6 hole b22 of the attaching part b12, thereby preventing raindrops, foreign substances and snow from entering the inside of the external case b21.

Furthermore, the female connector c29 wire c17 connected to the input • output terminal of the circuit board c21, the driving motor b23 wire c19, the switch b5 wire c18, and the slot c30 wire c16 are connected to each other through the wiring hole (b3) of the fixing screw (b2) within the internal component b8 and external component b10. These are designed spirally to prevent twisting of the wiring and the rubber band effect when the case C is driven vertically.

Additionally, the driving holder b9 is attached to the rotating shaft b24, driving the internal component b8 vertically, thereby operating the case C inside • outside the main body B. The female holder b7 and the male holder b11 are coupled, controlling the driving motor b23 via the switch b5. The external case b21 and the fixing band b15 are coupled and equipped to the vehicle exterior v, thereby, as shown in [b], connecting the air-conditioning pipe b29 connected the inside of the vehicle, and the wiring b18 of the male connector b27.

Additionally, the case C is connected to the main body B when the vehicle is parked. As shown in [a], the case C operates in response to the ignition status, sensor detection due to physical • chemical changes, the control of a dedicated button and a dedicated icon on the in-vehicle display for operating autonomous driving systems and advanced driver assistance systems using the camera device for vehicle safety according to the present disclosure, or voice recognition control, or wireless control via user's Mobile App and PC Web Driver, thereby, as shown in [b], preventing dirt, dust, foreign substances, ice and more from adhering to the surface of the brush c24 when the vehicle is parked, as well as vehicle damage and malfunctions.

[c] and [d] illustrate the interior • exterior of the main board box c20 in a horizontal layout. Firstly, [c] shows that 8 camera lenses c15 and 32 infrared LEDs c14 are exposed to the outside, through a groove of the main board box c20, and the external heating wire c5 is connected.

The infrared LED c14 is not controlled (on/off) not based on day or night but controlled (on) when there is no light at all during vehicle operation, or when the light sensor c4 detects the ambient light falling below the preset value, such as in dark fog, heavy rain, heavy snow, or tunnel areas. When the infrared LED c14 turns on, the infrared light emitted outward reflects off an external object and enters through the camera lens c15, where it is detected by the image sensor, providing a black-and-white image.

The external heating wire c5 is positioned close to the inner surface of the brush c24, removing moisture and fogging caused by the temperature difference between the inside and outside. This prevents video errors and icing phenomenon, allowing the brush c24 to rotate.

[d] illustrates the interior of the main board box c20, where connected to the circuit board c21 are 8 camera modules c35, each containing a camera lens c15, an image sensor and circuit wiring c34, the terminal of the infrared LED c14 and the internal heating wire c5.

The video data of the 8 camera modules c35 is assigned unique codes and compressed for each module from to 8, then transmitted to the network server through the antenna module. The server reconstructs the received data for each code individually.

The installation of the 8 camera modules c35 is intended to 360-degree capture when the field of view is 45 degrees. When the field of view of the camera module c35 is 90 degrees, 4 camera modules c25 are provided instead, enabling 360-degree capture around the vehicle without any blind spots.

Furthermore, the number of the camera modules c35 and infrared LEDs C14 may vary depending on the field of view, detection range and purpose. Included are an infrared sensor, LiDar, and a ToF sensor, which detect objects and distances around the vehicle, to control the vehicle automatically.

[e], [f], [g] and [h] illustrate the main board box c20, which includes one or more circuit boards c21 inside. These are rear, plan, and cross-sectional views of the two circuit boards c21 on the upper and lower sides. Firstly, as shown in [g], a fixing groove c36 for fixing the circuit board c21 is provided on the inner surface. As shown in the rear and plan views [e] and [f], the camera lens c15 and the infrared LED c14 are exposed to the outside. The circuit wiring c34 connected to the image sensor inside the camera module c35, the terminal of the infrared LED c14, and the heating wire c5 wire c12 are connected to the circuit board c21. Additionally, the screw hole c22 is provided at the center to accommodate the fixing screw b2.

As shown in [h], the fixing screw b2 engages with the fixing groove c8. Provided are the wiring hole b3 for connecting the wiring inside the internal component b8 and external component b10, along with the spiral bottom part b4 contacting the screw hole c27 of the brush motor 25.

Additionally, the two circuit boards c21 are connected to each other via a board wire c37 at the upper and lower sides. The circuit wiring c34 connected to the image sensor of the camera module c35 is connected to the circuit board c21 in a circular or C-shape to prevent from bending and breaking.

Furthermore, one or more circuit boards c21 are designed considering external design factors of the case C and the main body B, as well as internal system factors.

The configuration of the circuit board c21 includes a microprocessor for digital signal processing and control, an application processor for running application programs, a memory chip for storing data, an antenna module for wireless communication, a microphone and speaker for audio input • output, an amplifier connected to the microphone and speaker, input • output terminals for data communication and power supply, temperature and humidity sensors for measuring temperature and humidity, and a voltage regulator for maintaining a constant voltage for the heating wire c5 and the circuit board c21, all of which are interconnected and integrated.

Additionally, the video data from the camera module c35 during vehicle operation is processed by the application processor through the application program, and then transmitted via female • male connectors c29, b27, directly or indirectly connected to the hardware and software systems inside the vehicle, thereby facilitating the autonomous driving system and advanced driver assistance system by linking the image recognition vehicle control system using video data, with the navigation system using GPS locations.

Furthermore, the video data from the camera module c35 is compressed, wirelessly transmitted to the network server via the antenna module, and then stored. This allows the user, after logging into the network server through a mobile app or PC website, to check live or stored videos, wirelessly control the camera device of the present disclosure, and wirelessly update the application program.

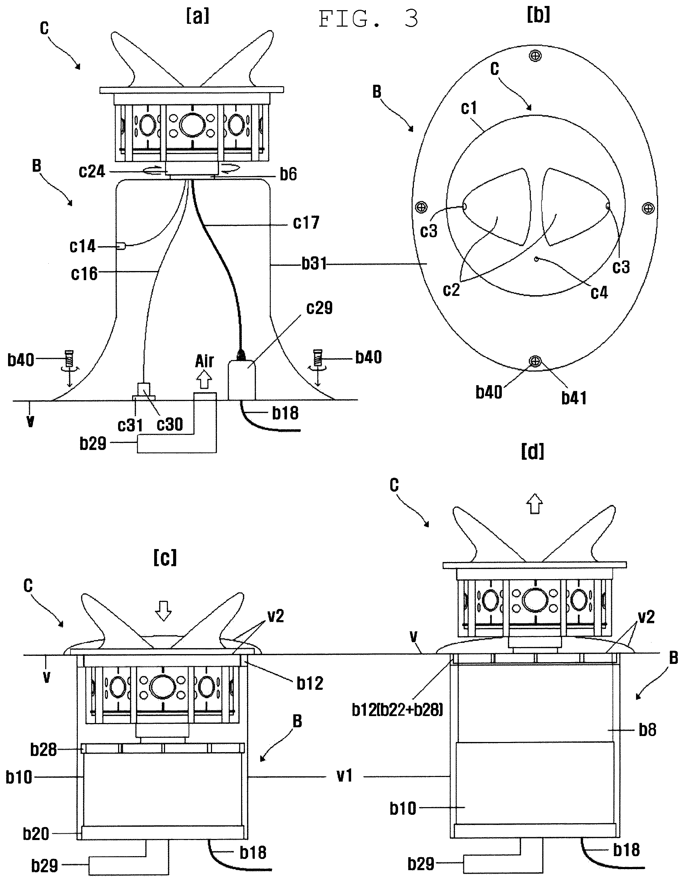

FIG. 3 is a structural modification view of the camera device for vehicle safety according to the present disclosure. Firstly, [a] and [b] are side and plan views illustrating that the case C and the main body B are fixed types, which are not designed to be vertically driven but are always separated. The rotation of the brush c24 is possible, and connected to the circuit board c21 inside a fixing case b31are the female connector c29 wire c17, the slot c30 wire c16, and the infrared LED c14 wire. As shown in [g] and [h] of FIG. 1, the bottom surface of the fixing case b31 has the same structure and function as the bottom of the external component b10.

Additionally, the male connector b24 connected through the wiring hole b17 on the vehicle exterior v is attached to the bottom surface of the female connector c29, and the wiring b18 is fixed to the cable holder b26. The SIM is inserted into the slot c30, checking the connection status (on/off) via a status LED c40. Finally, the air conditioning pipe b29 protruding toward the vehicle exterior v is inserted into the air conditioning pipe groove b30, and a fixing screw b40 is inserted into a screw groove b41 and attached to the vehicle exterior v, thus installing the case C and the main body B to the vehicle.

[c] and [d] are views illustrating the installation of the case C and the main body B in an internal case v1 inside the trunk and bonnet of the vehicle. Firstly, [c] illustrates the case C installed inside the internal case v1 in an un-driven state, while [d] illustrates the case C being driven outward from the internal case v1.

Furthermore, the internal case v1 has the same structure and function as the external component b21 shown in FIG. 1 and FIG. 2, as described by the reference numbers in the drawings.

The vehicle exterior v is not horizontal and varies in height due to wind resistance or design reasons. Thus, a cover v2 is provided to maintain the horizontal alignment of the case C and the main body B.

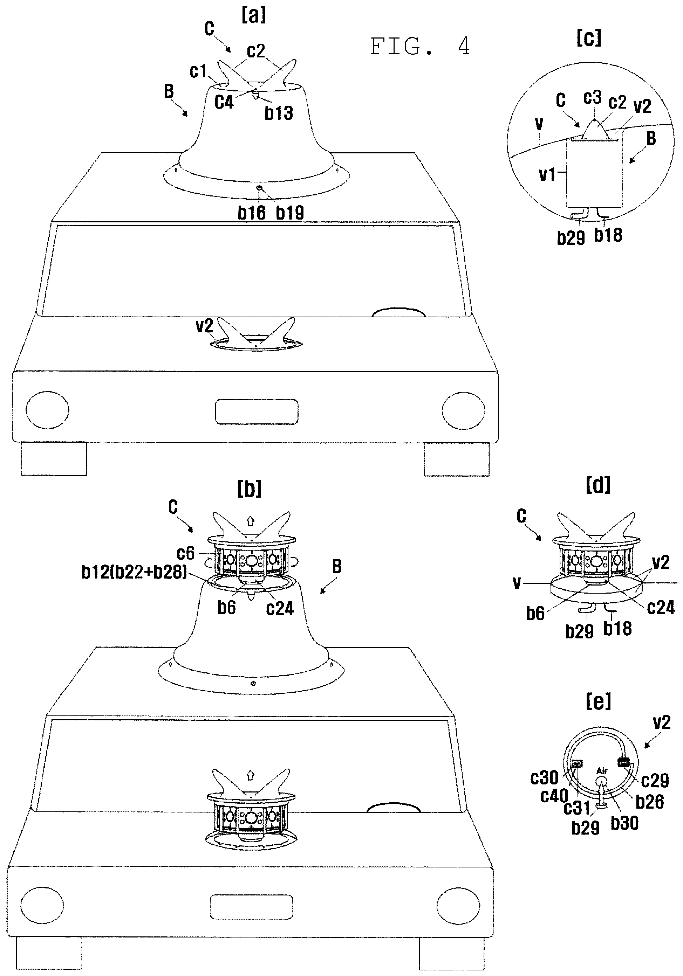

FIG. 4 is a schematic view of the camera device according to the present disclosure. [a] and [b] illustrate vertical driving type of the case C and main body B installed on the roof, trunk or bonnet of the vehicle. Firstly, [a] shows the state before driving, where the case C is coupled to the main body B. [b] show the state where the case C is driven outward from the main body B.

Since the external case b21 and the fixing case b31 of FIG. 3 enable 360-degree vehicle capture with the camera module of the case C, they are suitable for installation on the roof, which offers high visibility. On the other band, since the internal case v1 captures the front and rear of the vehicle with the camera module c35 of the case C, it is suitable for installation on the trunk or bonnet.

Additionally, as shown in [c], the cover v2 of the internal case v1 is finished (waterproof treatment) with a circular or polygonal shape on the higher side of the vehicle exterior v to align the horizontal level of the case C and the main body B, thereby preventing water and foreign substances from entering in the vehicle interior.

Furthermore, [d] and [e] illustrate not the case C driven in the main body B, but rather, as shown in [g] and [h], the bottom surface of the cover v2, which has the same structure and function as the same as the bottom surface of the external component b10, as described by the reference numbers in the drawings. The case C can be directly installed to the cover v2, which is fixed to the vehicle exterior v.

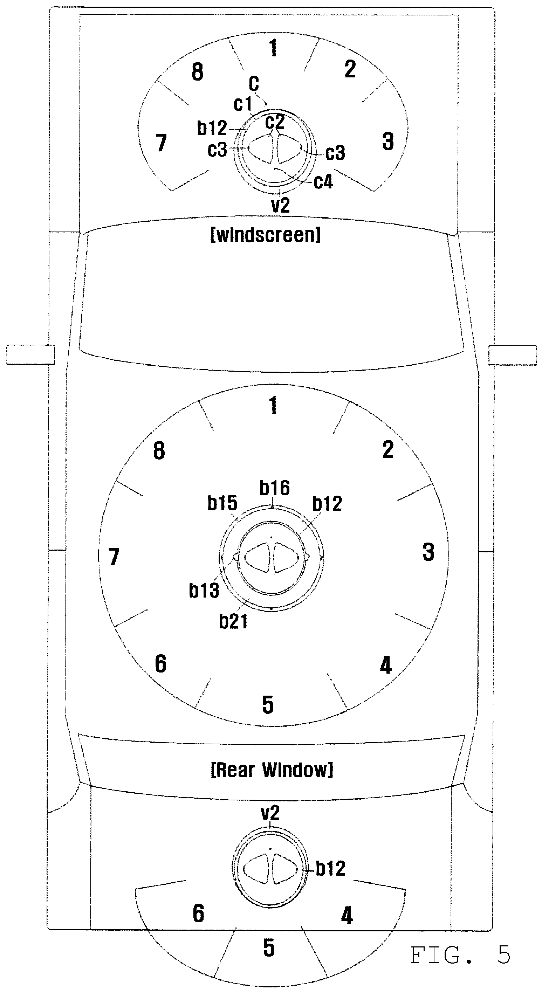

FIG. 5 is a view showing the shooting and detection range of the camera device for vehicle safety according to the present disclosure, explaining the top-down vehicle. The case C is installed in the internal case v1 cover v2 of the trunk and bonnet, while the external case b21 or the fixing case b31 is installed with the case C at the center of the roof.

Furthermore, when the internal case v1 is installed to the trunk and bonnet of the vehicle, the external case b21 or the fixing case b31 is not installed. Similarly, when the external case b21 or the fixing case b31 is installed to the vehicle, it is not suitable to install the internal case v1.

Additionally, in the drawing, when the field of view of the camera module c25, explained is 3620-degree capture through the 8 camera modules c25. When the field of view is 60 degrees, 360-degree capture is possible by installing the 6 camera modules c35 inside the case C.

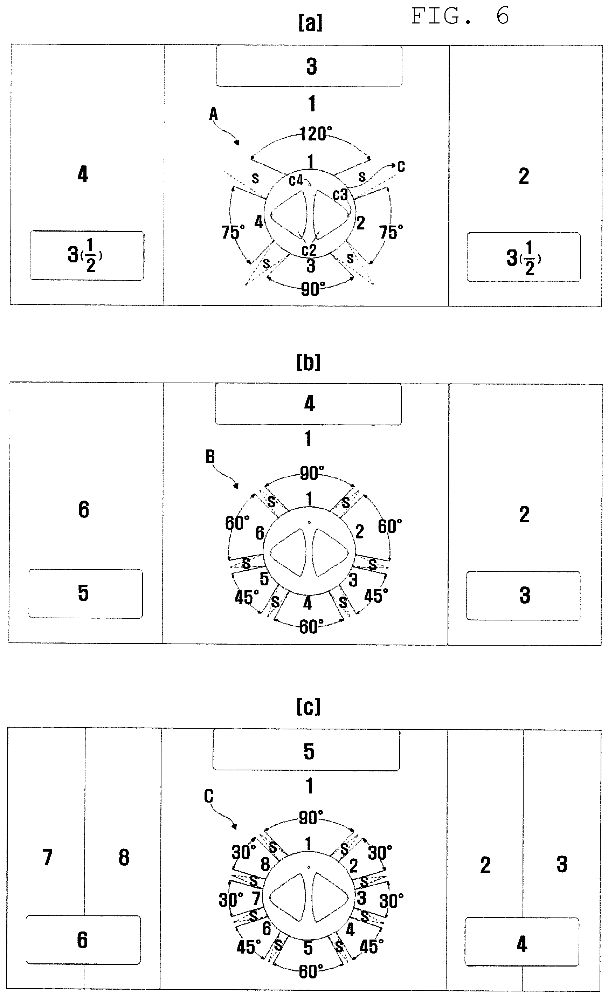

FIG. 6 is an image configuration view of the camera device for vehicle according to the present disclosure. [a], [b] and [c] illustrate examples of the split-screen format of a PC, mobile device, or in-vehicle display device, and the vehicle control method depending on the number and field of view of the camera module c35 inside the case C. Firstly, [a] illustrates the 360-degree capturing method and split-screen format through the 4 camera modules c35. 1 shows a video from the camera module c35 that captures the front view, the most crucial area for securing visibility during vehicle operation, with a field of view of 120 degrees. 3, positioned on the rear-view mirror at the top of 1 shows a video from the camera module c35 that capture the rear view of the vehicle, with, for example, a field of view of 90 degrees.

Furthermore, 4 and 2, positioned on the right • left sides of 1 show videos from the camera modules c35 that capture the right • left side views of the vehicle, with a field of view of 75 degrees each. 3(½), positioned on each (rectangular) side mirror at the bottom of 4 and 2 is a video of the rear view of 3 divided into left and right sections, each at 45 degrees (50:50).

[b] illustrates the 360-degree capturing method and split-screen format through the 6 camera modules c35. 1 shows a video that captures the front view of the vehicle, with a field of view of 90 degrees. 4, positioned on the rear-view mirror at the top of 1 is a video that captures the rear view of the vehicle, with, for example, a field of view of 60 degrees.

6 and 2, positioned on the right • left sides of 1 show videos that capture the right • left side views of 1, with a field of view of 60 degrees each. 5 and 3, positioned on the bottom of 6 and 2 show videos that capture right • left side rear views, each at 45 degrees.

[c] illustrates the 360-degree capturing method and split-screen format through the 8 camera modules c35. 1 shows a video that captures the front view of the vehicle, with a field of view of 90 degrees. 5, positioned on the rear-view mirror at the top of 1 shows a video that captures the rear view of the vehicle, with, for example, a field of view of 60 degrees.

Furthermore, 2 and 3, positioned on the left side of 1 sow videos that capture the right side view 2 of 1 and the right side view 3 of the vehicle, with a field of view of 30 degrees, each. 4, positioned on the side mirror at the bottom of 2 and 3 shows a video that captures the rear left side view of 5, with a field of view of 45 degrees.

Additionally, 7 and 8, positioned on the left side of 1 show videos that capture the left side view 8 of 1 and the left side view of the vehicle, with a field of view of 30 degrees, each. 6, positioned on the side mirror at the bottom of 7 and 8 show a video that capture the rear right view at the bottom of 7 and 8, with a field of view of 45 degrees.

The numbers of the 1 to 8 are used to explain the capturing range (field of view) of each camera module c35, and their positions within the main board box c20 inside the case C. The field of view for 360-degree capture may vary or be the same.

Furthermore, in [a], [b] and [c], A, B and C of 1 are plan views that explain the top-down positions and field of views of the camera modules c35 inside the case C. Since each camera lens c15 is not positioned at the center of the case C, angular gaps s occur between them. This can be addressed by adjusting the field of view for each camera lens by approximately 5to 10%.

As the above, with the video of the camera module c35, it is possible to recognize the position, stop, and movement of vehicles, pedestrians, and objects in front, behind, left, and right. It is possible to recognize speed, distance, and direction of movement by calculating the time values for the enlargement or reduction of objects, or the time taken to move left or right. The vehicle control values are calculated and executed by recognizing lane markings, traffic lights, LED signs, road signs, crosswalks, medians, shoulder barriers, brake lights, and turn indicators, facilitating the autonomous driving system such as braking, lane changing and maintenance, acceleration • deceleration, collision avoidance, and left • right turns.

In the case of manual driving, an emergency alert signal can be output through the in-vehicle speaker or display device to the driver who fails to recognize an urgent hazard situation during operation, or emergency control of the vehicle control unit (VCU), including steering, lighting, braking, acceleration, and transmission devices, thereby facilitating a driver assistance system.

Additionally, when the user checks the real-time or stored video from the camera module c35 on a PC, mobile device or in-vehicle display device, as shown in [a], [b] and [c] above, the 360-degree full view of the vehicle can be seen on a single screen, making it easy and convenient to check the footage just like the driver's actual line of sight. Moreover, it is possible to remote control the vehicle in real time by outputting the video in the aforementioned split-screen format through a network-connected display device.

The camera device for vehicle safety according to the present disclosure includes an autonomous driving system that integrates a driver assistance system and a navigation system, and this also includes a dedicated button and a dedicated icon on the in-vehicle display for controlling the operation of the systems.

Furthermore, the camera device for vehicle safety according to the present disclosure includes a Vehicle Remote Control Unit and a vehicle remote control system for remotely controlling the vehicle in real time, along with a dedicated button and a dedicated icon on the in-vehicle display for controlling the operation of the vehicle remote control unit and system.

Additionally, the camera device for vehicle safety according to the present disclosure includes being mounted on drones and robots, and outputs the video by configuring the screen using the aforementioned split-screen format on a PC, mobile device, and in-vehicle display.

## Claims

1. A camera device connected to hardware and software systems and installed in a vehicle, a camera device for vehicle safety comprising:
a case that facilitates power and data input • output, containing a camera module for acquiring video data and a circuit board, and connected to vehicle's hardware and software systems; and
a main body that is fixed to the vehicle and drives the case, wherein
the camera device is connected to an Electric Power Control Unit (EPCU) and an Electronic Control Unit (ECU), including a Vehicle Control Unit (VCU), and facilitates an autonomous driving system including Advanced Driver Assistance System (ADAS).

2. The camera device for vehicle safety of claim 1, wherein
the circuit board includes an application processor (CPU), a memory chip for data storage, a GPS for measuring vehicle location, and an antenna module for wireless communication,
the circuit board transmits and stores video data and vehicle location information in real-time to a server connected via a wireless network, through the antenna module, and links a navigation system using the GPS with a video recognition vehicle control system, facilitating the autonomous driving system, including the Advanced Driver Assistance System to be possible, and
after connecting to a network server through a user terminal, the circuit board facilitates checking video data, wirelessly controlling the camera device and performing wireless updates of an application program.

3. The camera device for vehicle safety of claim 2, wherein
the camera module is equipped with a camera lens, an image sensor, which converts light entering through the camera lens into a digital signal, is connected to the circuit board and the application processor for processing the application program of the video data, a circuit wiring for data transmission by connecting the image sensor, and an infrared LED that includes a light sensor for capturing images in nighttime, or low-light or dark areas,
the camera module is connected to the circuit board to wirelessly transmits data to the network server through the antenna module, and to the hardware and software systems inside the vehicle through an input • output terminals, thereby being connected to the VCU for real-time storage of video data during vehicle operation and vehicle control, facilitating the autonomous driving system and the advanced driver assistance system through algorithms based on the video data.

4. The camera device for vehicle safety of claim 3, wherein
the network server calculates and stores vehicle control values using an artificial intelligence system based on the driver's patterns, such as response patterns to traffic lights and pedestrians, braking patterns, acceleration and deceleration patterns, lane-keeping and lane-changing patterns, parking patterns, left and right turn patterns, average driving distance and speed, frequently visited destinations, and obstacle avoidance patterns, which are then applied during autonomous driving.

5. The camera device for vehicle safety of claim 3, further comprising a microphone for detecting and recording sounds around the vehicle and a speaker for audio output, wherein
the microphone detects sounds around the vehicle through the user terminal and the speaker outputs user's voice in real-time.

6. The camera device for vehicle safety of claim 5, further comprising a brush for removing foreign substances from the camera lens during vehicle operation, a brush pad functioning as a wiper for the brush, and a brush motor for rotating the brush, wherein
the brush motor operates when raindrops are detected by a rain sensor equipped on the vehicle, when the vehicle is driving at a high speed exceeding a preset value, when the wiper is operated, or when a measurement value related to at least one of a temperature sensor or a humidity sensor.

7. The camera device for vehicle safety of claim 6, further comprising a temperature sensor for measuring the internal temperature, a humidity sensor for measuring humidity, and a heating wire for removing moisture adhered to the surface of the case and the brush, wherein
the heating wire is connected to the temperature sensor and the humidity sensor, and turns on when a measurement value related to at least one of the temperature sensor and the humidity sensor is detected, turning off after reaching normal levels or after a set time.

8. The camera device for vehicle safety of claim 2, wherein
the main body is equipped with a driving motor for automatically operating the case through wireless control based on the ignition status of the vehicle, the operation of sensors due to physical • chemical changes, the control via a dedicated button and a dedicated icon on the in-vehicle display for controlling the operation of the camera device, voice recognition control, or the user terminal, and a switch for controlling the driving motor.
